# EUROPEAN PATENT APPLICATION

(11) **EP 3 393 027 A1**
(43) Date of publication of application: **24.10.2018**
(21) Application number: 18168008.3
(22) Date of filing: 18.04.2018
(51) Int. Cl.: H02M 1/34

(54) **SOFT-SWITCHING FOR HIGH-FREQUENCY POWER CONVERSION**

(30) Priority: 18.04.2017 US 201762602289 P
(71) Applicant: EMD Technologies, Inc., Saint-Eustache QC J7R 0A1 (CA)
(72) Inventor: BELAND, Robert, St. Marthe sur le Lac, Québec QC J0N 1P0 (CA); CARLI, Giampaolo, Saint-Lazare, QC J7T 2N8 (CA)
(74) Representative: Schmidbauer, Andreas Konrad

(57) **Abstract**

A power converter designed for operation at high frequencies includes a soft-switching cell comprising a split inductor, a resonant inductor, a resonant capacitor, two diodes and a controlled semiconductor. Alternatively, the power converter includes a soft-switching cell comprising a transformer having isolated windings, a resonant inductor, a resonant capacitor, two diodes and a controlled semiconductor.

## Description

This Application claims priority to US Application 62/602,289, filed April 18, 2017.

### Field of the Invention

The present inventions are directed to soft-switching for power conversion.

### BACKGROUND OF THE INVENTION

Conventional prior art pulse-width-modulated converters experience substantial switching losses when operated at high frequencies. These switching losses limit the frequency at which the converter can be operated, which in turn limits the ability to reduce the size and weight of the converter reactive components and hence the size and weight of the converter.

There are several existing switching technologies, where switching losses were reduced only at the expense of greatly increased voltage/current stresses of the switches; this frequently leads to a substantial increase in conduction loss. For example, the active switch in a zero-voltage-switched (ZVS) quasi-resonant converter (QRC) is subjected to relatively low current stress. However, in single-ended ZVS-QRC topologies, the active switch suffers from an excessive voltage stress which is proportional to the load range. Although the active switch operates with ZVS, the rectifier diode operates with ZCS. The parasitic junction capacitance of the rectifier diode interacts with the large resonant inductor, resulting in severe switching oscillation noise. The zero-voltage-switched (ZVS) multi-resonant convert (MRC) technique utilizes all major parasitics of the power stage and all semiconductor devices in a ZVS-MRC operate with zero-voltage switching, which substantially reduces the switching losses and switching noise. All semiconductor devices in a ZVS-MRC operate with zero-voltage switching, which substantially reduces the switching losses and switching noise. Nevertheless, both active and passive switches in a ZVS-MRC are subjected to voltage and current stresses significantly higher than those in their PWM counterparts. Although the switching losses are significantly reduced, the conduction loss increases significantly. In addition, the advantage of the smaller size of the reactors (the power transformer and filters) due to high-frequency operation is also partially mitigated by the need for a relatively large resonant inductor, whose size is usually comparable to that of the power transformer. This resonant inductor also introduces additional core loss and copper loss.

The ZVS quasi-square-wave converter (QSC) technique offers zero-voltage switching for both the active and passive switches without increasing their voltage stresses. This is a very desirable feature for high-frequency conversion, where MOSFETs are used, since power MOSFETs favor the zero-voltage switching operating mode, and their conduction characteristics are strongly dependent on voltage rating. However, the switches in a ZVS-QSC suffer from a high current stress which can be more than twice of that in its PWM counterpart; thus, the conduction losses are greatly increased. In addition, the high turn-off current of the main switch tends to increase the turn-off loss, which is particularly relevant for minority-carrier power switch devices, such as IGBTs and BJTs.

It is possible to use a zero-voltage-transition (ZVT) PWM converter (such as a boost ZVT-PWM converter) with a resonant network in parallel with both the active pulse modulating switch, and the passive converter diode switches. The resonant network includes an inductance/capacitance tank circuit controlled by an auxiliary switch, and an auxiliary diode switch in circuit with the auxiliary switch. The resonant circuit can be connected in parallel with a pulse-width-modulating switch.

The auxiliary switch, also in parallel with the pulse-width-modulating switch, is turned on (i.e., rendered conducting) for a short interval just prior to turning on the pulse-width-modulating switch. The resonant circuit inductor current ramps up until it turns off the output rectifier diode, commutating it with a switching operation. The inductor current continues to increase, owing to the resonance of the inductance/capacitance tank circuit, bringing the voltage across the pulse-width-modulating circuit to zero at a time prior to turn-on of this switch. The anti-parallel diode of the pulse-width-modulating switch is thus turned on; the turn-on signal for this switch is applied while the anti-parallel diode is conducting, providing zero-voltage-switching of the modulating switch at turn on. The auxiliary switch is turned off and the modulating switch is turned on. An auxiliary diode clamps the voltage across the auxiliary switch, so that the auxiliary switch is not stressed at turn off. The energy stored in the resonant circuit is transferred to the load, and the resonant inductor current rapidly drops to zero, at which time the auxiliary diode turns off. For the boost converter the remainder of the operation is the same as that of a conventional pulse-width-modulated boost converter. As will be explained in more detail, the auxiliary-switch-controlled resonant circuit of this invention can be employed advantageously with a wide converter and inverter pulse-width-modulated topographies in order to provide soft-switching commutation of both the power modulating switch and the rectifier diode.

Usually, at a higher power level, a continuous-conduction-mode boost converter may be a preferred implementation of a front-end converter with active input-current shaping. The output voltage of such a boost input-current shaper is relatively high, since the DC output voltage of the boost converter must be higher than the peak input voltage. Due to this high output voltage, a fast-recovery boost rectifier is required. At a high switching frequency, a fast-recovery rectifier produces a significant reverse-recovery-related loss when it is switched under a "hard-switching" condition. As a result, "hard-switched", boost input-current-shapers are operated at relatively low switching frequencies to avoid a significant deterioration of their conversion efficiencies.

There are several switched boost converters operating with an auxiliary active switch operating together with a few passive components (e.g., inductors and capacitors), thus forming an active snubber that is used to control the rate of change of rectifier current (di/dt) and to create conditions for zero-voltage switching (ZVS) of the main switch and the rectifier. Some boost converter circuits cam use a snubber inductor connected to the common node of the boost switch and the rectifier to control the rate of change of rectifier current (di/dt). As a result of the snubber-inductor location, the main switch and the rectifier in the circuits possess minimum voltage and current stresses. Notably, the auxiliary switch operates under "hard" switching conditions, as it is closed while its voltage is equal to the output voltage, and subsequently opened while carrying a current greater than the input current.

### SUMMARY OF THE INVENTION

The present inventions are directed to soft-switching for power conversion. The present inventions are also directed to soft-switching cells or modules employed in high-frequency power converters.

According to one aspect, a power converter designed for operation at high frequencies includes a soft-switching cell comprising a split inductor, a resonant inductor, a resonant capacitor, two diodes, and a controlled semiconductor.

According to another aspect, a power converter designed for operation at high frequencies includes a soft-switching cell comprising a transformer having isolated windings, a resonant inductor, a resonant capacitor, two diodes and a controlled semiconductor.

The soft-switching cell can transform several existing host conventional power conversion topologies from hard-switched type to soft-switched type. The resonant inductor and the resonant capacitor form a resonant tank connected to an active circuit that is actuated just prior to the turn-on transition of the main switching device in order to event triggers a half-wavelength resonant voltage transition on the resonant capacitor that causes its voltage to transition from a non-zero value to virtually zero.

The split inductor may include a transformer with isolated windings.

The two diodes may include a first clamp diode connected from ground to one terminal of the split inductor, and a second clamp diode connected from another terminal of the split inductor to a known DC voltage bus. Alternatively, the two diodes may include a first clamp diode connected from ground to one terminal of the transformer, and a second clamp diode connected from another terminal of the transformer to a known DC voltage bus.

The second clamp diode that is connected from a terminal of the split inductor (or of the transformer) to a known DC voltage bus may be replaced by a zener diode in order to facilitate the demagnetization of the split inductor (or the transformer) under very low load conditions.

The soft-switching cell can further include a lossless capacitive snubber, connecting the controlled semiconductor to the resonant capacitor. The lossless snubber includes a diode and a capacitor.

According to another aspect, a method for controlling operation of a power converter designed for operation at high frequencies includes providing a soft-switching cell comprising a split inductor, a resonant inductor Lr, a resonant capacitor Cr, two diodes, and an Qₐᵤₓ controlled semiconductor. This control method produces a first drive signal for the an Qₐᵤₓ controlled semiconductor and a second drive signal for the an Qₘₐᵢₙ controlled semiconductor is part of the host conventional power conversion topology.

The first drive signal may be terminated upon sensing a voltage transition at any of the terminals of the split inductor. The first drive signal may be terminated after a time that is calculated or estimated using known circuit values and parameters.

The second drive signal may initiated upon sensing a transition on the voltage of the resonant capacitor. Alternatively, the second drive signal may be initiated upon comparison of the voltage of the resonant capacitor to a set minimum threshold. Alternatively, the second drive signal may be initiated upon detection of a decrease of the rate of change of the voltage of the resonant capacitor. The second drive signal may be terminated by a PWM controller. Alternatively, the second drive signal may be terminated by a peak-current mode controller.

The operational frequency may be modulated in response to the feedback control loop error signal.

According to yet another aspect, a method for controlling operation of a power converter designed for operation at high frequencies includes providing a soft-switching cell comprising a transformer with isolated windings, a resonant inductor Lr, a resonant capacitor Cr, two diodes, and an Qₐᵤₓ controlled semiconductor. This control method produces a first drive signal for the an Qₐᵤₓ controlled semiconductor and a second drive signal for the an Qₘₐᵢₙ controlled semiconductor is part of the host conventional power conversion topology.

The first drive signal may be terminated upon sensing a voltage transition at any of the windings of the transformer. The first drive signal may be terminated after a time that is calculated or estimated using known circuit values and parameters.

The second drive signal may initiated upon sensing a transition on the voltage of the resonant capacitor. Alternatively, the second drive signal may be initiated upon comparison of the voltage of the resonant capacitor to a set minimum threshold. Alternatively, the second drive signal may be initiated upon detection of a decrease of the rate of change of the voltage of the resonant capacitor. The second drive signal may be terminated by a PWM controller. Alternatively, the second drive signal may be terminated by a peak-current mode controller.

The operational frequency may be modulated in response to the feedback control loop error signal.

According to yet another aspect, we transform basic hard-switched power conversion topologies into soft-switching topologies by means of adding an active electronic circuit, or soft-switching cell, to the main switching element. This soft-switching cell (SSC) consists of a resonant tank (Lr, and Cr) where the capacitor (Cr) is coupled to the power terminals of the main switching device of the existing circuit through a diode. The resonant tank is connected to an active circuit that is actuated just prior to the turn-on transition of the main switching device; this event triggers a half-wavelength resonant voltage transition on the resonant capacitor (Cr) that causes its voltage to transition from a non-zero value to virtually zero. At this critical time, when the voltage across the main switching device has been reduced to zero by the action of the soft-switching cell, the turn-on command to the main switching element is generated by the control logic. Under these favorable conditions, the main switching device experiences ZVS lossless turn-on switching. In order to produce the half-wavelength resonant transition, the soft-switching cell temporarily drives the resonant tank with a voltage level that is nominally equal to one half the initial voltage level present on the resonant capacitor (Cr).

Depending on the various embodiments, our switching is accomplished by connecting a split inductor, an auto-transformer or a isolation transformer, to a known and strategically chosen voltage level that is accessible in the circuit. It is important to note that beside achieving ZVS, the resonant nature of the transition entails that all voltages and currents feature controlled and weak rate of change throughout the turn-on transition. This significantly improves EMI emission levels. The beneficial action of the soft-switching cell is not restricted to the turn-on transition alone, but extends to the turn-off transition as well. In fact, the resonant capacitor (Cr), having been discharged to zero volts following the turn-on transition, is maintained in this discharged state throughout the conduction period and it is still discharged at the time of turn-off. As the main switching element turns off, the circuit current is automatically removed from the switching element and redirected into Cr through the coupling diode. This diversion of turn-off current from the main switching element greatly lessens the turn-off loss even in the presence of some residual current-tail. Furthermore, as was the case during turn-on, the presence of Cr greatly reduces the rate of rise of the voltage level across the switching element with consequent improvement of EMI emission.

We also offer a distinct advantage wherein the resonant transition is calibrated in such a way that no significant current is expected to circulate in the reverse direction, from emitter to collector of neither the main switching device nor the auxiliary switching device present in the soft-switching cell. This minimizes conduction loss and removes the need for large and expensive freewheeling protection diodes across the switching devices.

Since the soft switching cell contains an actively controlled device (Qₐᵤₓ), the control mechanism / method for the existing power circuit is modified. The control mechanism / method in a basic form includes: (1) means for driving Qₐᵤₓ (2) means for detecting the end of the half-wavelength transition and (3) means of allowing full demagnetization of the transformer. Furthermore, the control logic may also include frequency foldback for low load operation and a back-up timer for preventing excessively protracted activation of Qₐᵤₓ.

The soft-switching cell provides significant reduction of both switching loss and EMI emissions. In the particular case of higher power applications, the soft-switching cell extends the effective frequency range of IGBTs from a maximum of 20kHz to beyond 100kHz.

Our soft switching cell (or module) is applicable to most power electronics needs, but is particularly pertinent to high-power products. In present industry trends, whenever higher power levels (> 5kW) are involved, the switching element of choice is the Integrated Gate Bipolar Transistor (IGBT). Indeed this device features the critically low ON-state voltage that results in manageable power loss during conduction. On the other hand, the internal structure of the IGBT is such that both turn-on and turn-off thermal losses are inherently substantial. This issue is particularly regrettable in the case of the turn-off transition because of the so-called "current-tail" characteristic. This is a stubborn tendency of the turn-off current to keep flowing in the IGBT for some time (several microseconds) even as the voltage is rising, resulting in significant energy loss. Moreover, the IGBT current-tail is heavily dependent on external variables such as temperature, current level, and rate of rise of the collector voltage. Due to these characteristics, IGBTs are seldom deployed at frequencies higher than 20kHz when used in hard-switching regimes; that is, switching methods that allow the switching element to block a significant voltage at the time of turn-on or to conduct significant current at the time of turn-off. On the other hand, soft-switching is defined as any of several techniques that remove voltage just prior to turn on or remove current just prior to turn off. The resulting switching loss is dramatically reduced, permitting higher switching frequencies and a more straightforward management of any generated electromagnetic interference (EMI).

Our soft switching cell is particularly applicable to sometimes called "Soft-Transition" converters described in US Pat.4,959,764 and US Pat.5,418,704. We specifically address the need for a simple active circuit (the soft-switching cell, or module; i.e., SSC) that is added onto traditional, non-isolated hard-switched topologies that use IGBTs at relatively high power levels. Furthermore, we can apply the soft-switching cell to circuits using other switching element technologies, such as MOSFETs and BJTs is trivial and is included in the scope of this invention.

### BRIEF DESCRIPTION OF THE DRAWINGS

Fig. 1 illustrates schematically a boost converter with a soft-switching cell or module.
Fig. 1A illustrates separately the soft-switching cell used in the boost converter shown in Fig. 1.
Fig. 2 illustrates schematically a buck converter with a soft-switching cell.
Fig. 3 illustrates schematically a buck-boost converter with a soft-switching cell.
Fig. 4 illustrates schematically a Cuk converter with a soft-switching cell.
Fig. 5 illustrates schematically a SEPIC converter with a soft-switching cell.
Fig. 6 illustrates waveforms for the boost converter with the soft-switching cell shown in Figs. 1 and 1A.
Fig. 7 illustrates schematically a boost converter with a soft-switching cell featuring Qₐᵤₓ turn-off snubber and demagnetization.
Fig. 8 illustrates schematically a SEPIC converter with a soft-switching cell with output not referenced to ground.
Fig. 9 illustrates schematically a current-fed push-pull converter with a soft-switching cell.
Fig. 10 illustrates controlling the boost converter with the soft-switching cell as schematically shown in Fig. 7

### DETAILED DESCRIPTION OF ILLUSTRATED EMBODIMENTS

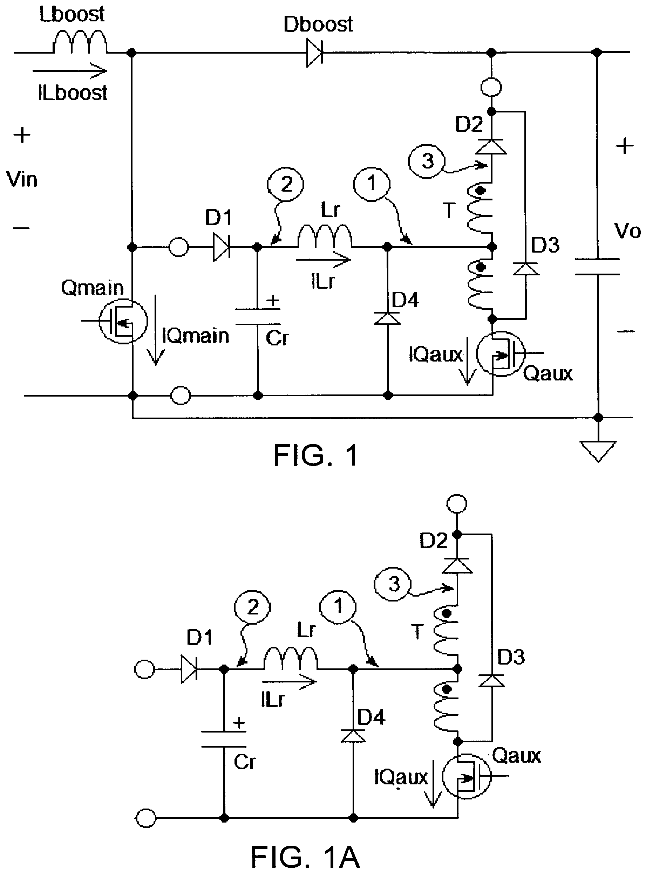

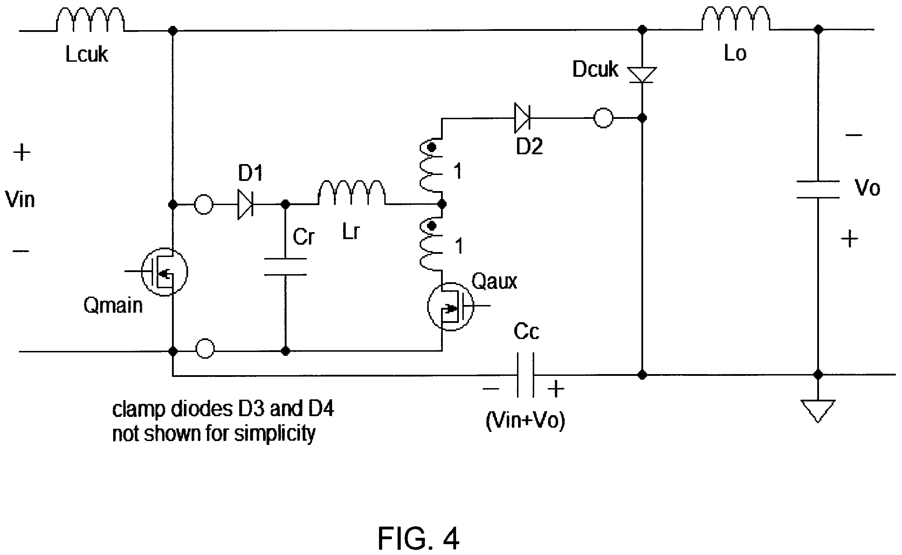

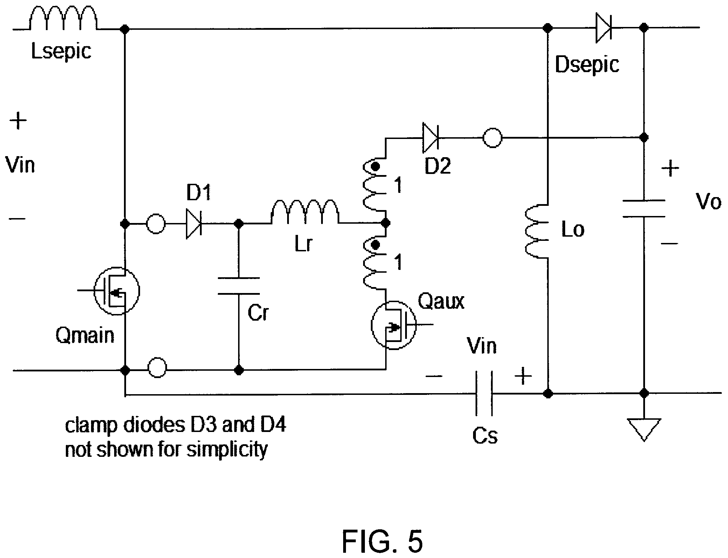

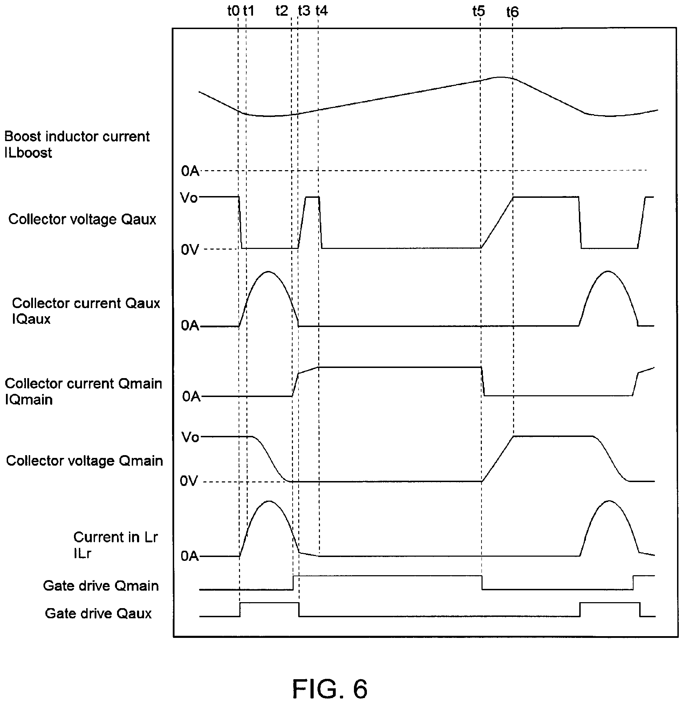

Figs. 1, 2, 3, 4, and 5 illustrates schematically embodiments of different power conversion topologies modified with a soft-switching cell (SSC) shown in Fig. 1A. The soft-switching cell includes a split inductor, a resonant inductor, a resonant capacitor, two diodes, and a controlled semiconductor. The soft-switching cell alternatively includes a transformer having isolated windings, a resonant inductor, a resonant capacitor, two diodes and a controlled semiconductor. In order to illustrate its operation, Fig. 6 shows the relevant signal waveforms relative to the boost converter shown in Fig.1.

Referring to Fig. 6, starting at a time t₀ when Qₘₐᵢₙ is not conducting, D_{boost} is conducting, Lr carries no current and Cr is charged at a voltage equal to Vo, the output voltage. At time t₁, the control logic begins the turn-on transition by driving Qₐᵤₓ to its conductive state. Resonant inductor Lr begins to conduct current that impinges upon the center tap of the split inductor T; this current separates equally between the two windings of T due to transformer action and a nominal 1:1 turns ratio of the two windings. As both Qₐᵤₓ and D2 conduct, the voltage across split inductor T is approximately equal to the output voltage Vo. Again due to transformer action, the split inductor divides this voltage equally across the two winding. Therefore the voltage at node 1 is approximately one half of Vo. The voltage at node 2, on the other hand is clamped at the initial voltage of Vo given the conducting state of D_{boost}. During this time interval, the voltage across inductor Lr is constant and equal to one half of Vo, causing the current in Lr to increase linearly.

At time t₂, the current in Lr reaches the same amplitude as the current through the boost inductor L_{boost}. As all the input current has been diverted from it, boost diode D_{boost} turns off, no longer clamping the voltage at node 2, thus allowing Cr to begin resonating with Lr. This resonance is centered about the voltage at node 1, or one half of Vo; therefore, at node 2 the initial voltage Vo will sinusoidally discharge to zero volts without attempting to assume negative values.

At time t₃, at the end of the discharge time of Cr, the control logic drives Qₘₐᵢₙ to its conductive state; as the voltage across Qₘₐᵢₙ is approximately zero at this time, this turn-on transition does not entail any significant energy loss. Now that Qₘₐᵢₙ is conducting, the voltage across Cr is prevented from oscillating back and is rather clamped at approximately zero volts. The current in Lr now decreases linearly until it becomes equal to twice the magnetizing current of the split inductor T, at time t₄. At this time t₄, diode D2 stops conducting and the voltage at node 3 begins to decrease quickly; simultaneously, the control logic drives Qₐᵤₓ into its off-state. It is noteworthy that the turn-off current level of Qₐᵤₓ is limited to a modest value of only twice the magnetizing current of T; thus the turn-off energy loss, including current-tail effects, is very small for Qₐᵤₓ. With these conditions, transformer T undergoes a classic "flyback" transition whereby the voltage across it quickly reverses; clamp diodes D3 and D4 limit this excursion to a maximum of twice the output voltage Vo. This negative voltage quickly demagnetizes transformer T until the transformer core is magnetically reset, at time t₄. The transformer voltage now quickly falls to zero volts; at this time the whole boost current flows through Qₘₐᵢₙ, while Cr and Lr are both discharged. This situation continues for the remainder of the on-time of Qₘₐᵢₙ, until the control logic determines that Qₘₐᵢₙ should turn off, at time t5. The turn-off transition of Qₘₐᵢₙ is very smooth due to the presence of the initially discharged Cr, which now acts as a very effective turn-off snubber, limiting the collector voltage rate of change to very low values. This slow rate of change of the collector voltage reduces EMI emissions and decreases the turn-off energy loss by a significant factor. Once the collector voltage reaches the output voltage value Vo, the boost diode D_{boost} begins to conduct the boost current. At this stage the circuit parameters are identical to the initial parameters, as the switching cycle is ready to repeat all the transitions described above.

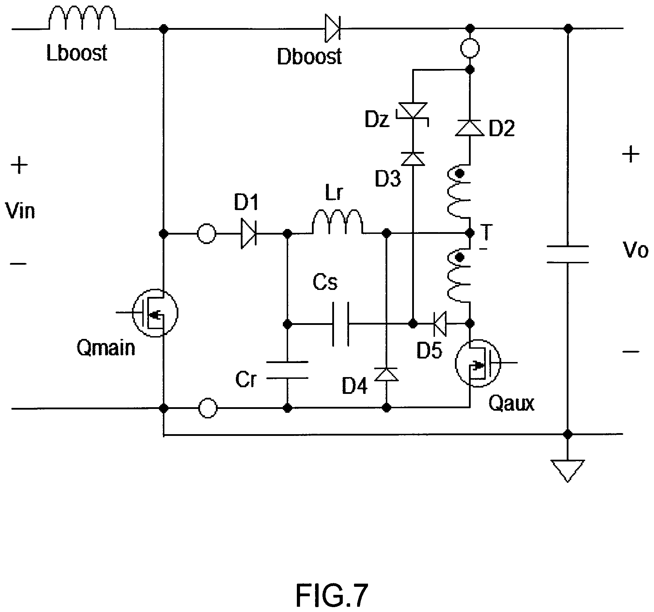

Fig. 7 illustrates a more sophisticated embodiment of the boost converter shown in FIG. 1. This embodiment takes advantage of the fact that Qₐᵤₓ turns off while Qₘₐᵢₙ is conducting and resonant cap Cr is discharged. Therefore, a turn-off diode-capacitor snubber (D5-Cs) can be added to the collector of Qₐᵤₓ in order to decrease the rate of change of voltage during the turn-off transition; this further decreases switching loss and improves EMI emissions.

FIG. 7 also shows the addition of power zener Dz in the clamping path. In normal operation this zener simply adds some voltage to the clamp voltage of Qₐᵤₓ and otherwise does not affect operation as described above. However, its presence becomes critical if the conduction time of Qₘₐᵢₙ is allowed to approach smaller durations so that Qₘₐᵢₙ turns off occurs while the magnetic reset of transformer T is not yet completed. In this case, voltages at node 2 and node 1 increase, drastically reducing the reset voltage of T. Consequently, in the absence of Dz, the reset time would become unpractically long, leading to possibly destructive saturation of transformer T. The presence of Dz, on the other hand, introduces a minimal reset voltage that forces demagnetization under all conditions. In practical circuits, the zener voltage of Dz can be relatively small so that the added voltage stress on Qₐᵤₓ can be limited to an extra 5% or less.

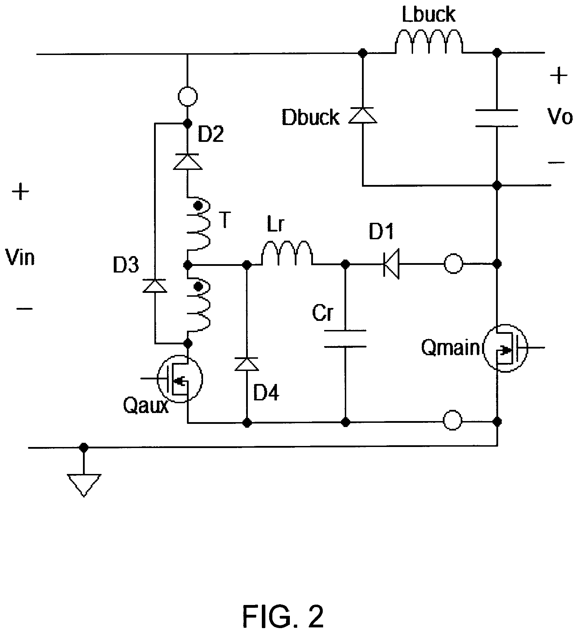

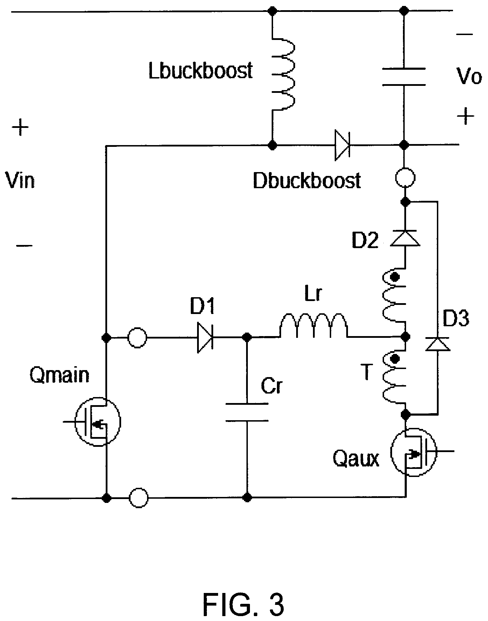

Other embodiments of the present invention are applications to basic conversion topologies other than the boost as shown in Figs. 2, 3, 4, 5. In such embodiments the basic operation of the soft-switching cell (SSC) is very similar to the one described in detail above. An important element for the proper functioning of the SSC in any converter topology is the presence of a stable DC voltage bus that has a known correlation to the main IGBT's off-time voltage. For instance, in the case of the boost the output voltage represents this stable DC bus; its correlation to the main IGBT's off- voltage is simply 1 to 1. In the case of the buck converter, the stable DC bus is the input voltage Vin; here too the correlation to the IGBT voltage is 1:1. In the embodiments shown in Figs. 3, 4, and 5, using the buckboost converter, the Cuk converter, and the SEPIC converter, respectively, the stable bus is provided by the sum of the input and output voltages.

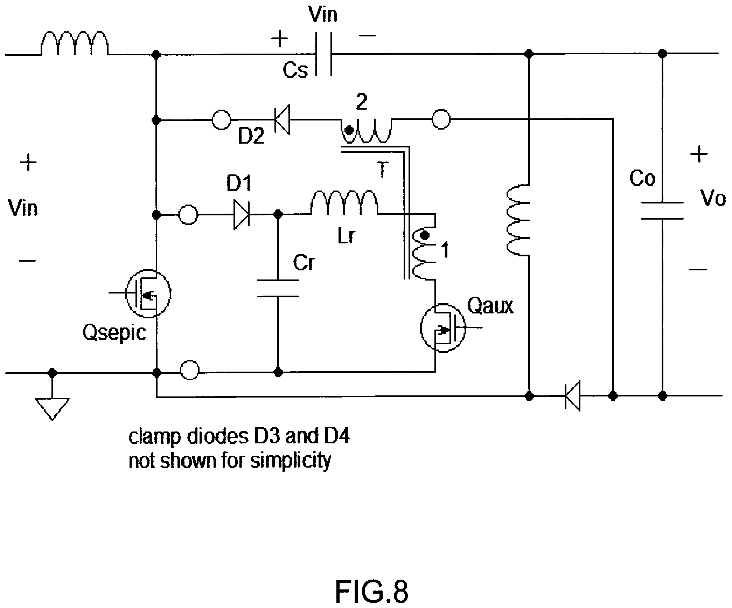

In other embodiments, the needed stable DC bus may be referenced to a different voltage with respect to the common terminal of the soft-switching cell. In this case, the split inductor may be rewired as a transformer with two isolated windings. As example of such embodiments is the SEPIC converter, shown in FIG. 8. In this embodiment, the stable bus is across the series combination of Co and Cs, which is not referenced to ground. In this case, the whole of one winding of T is across the DC bus; because the intent is to produce a voltage equal to one half of this voltage, the transformer turns ratio will be 2 : 1. Fig. 8 does not show any reset mechanism for transformer T, as this function can be performed using several standard techniques, such as the use an additional reset winding.

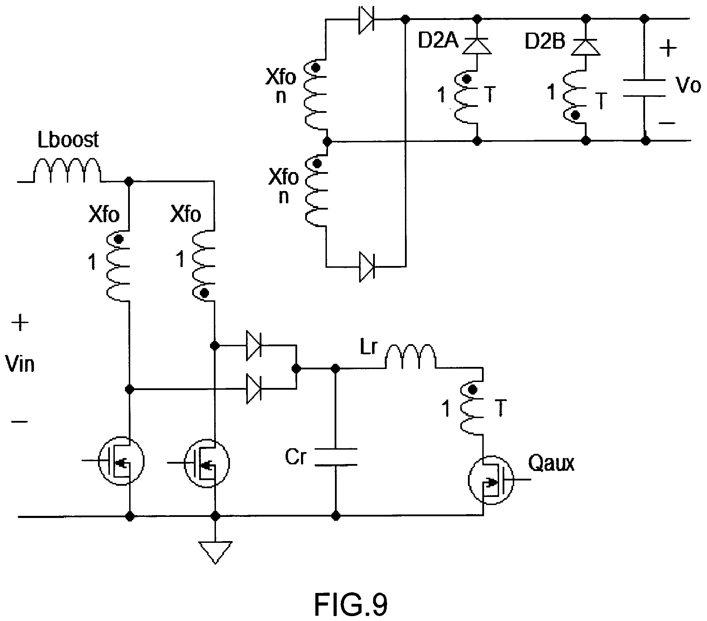

The disclosed technique can be applied to many isolated topologies such as the forward converter or the flyback. For example, FIG. 9 shows the SSC applied to a current-fed push-pull topology (that is, isolated boost). In this embodiment, the reset winding is shown connected to the output voltage through D2B.

The control method of the soft-switching cell aims at generating the drive signals to both Qₘₐᵢₙ and Qₐᵤₓ. In its basic functionality, the control signal for Qₐᵤₓ requires only a trigger signal from the controller, designating the start of the Qₐᵤₓ drive pulse (t₀ in FIG. 6). In contrast, the duration of the Qₐᵤₓ drive signal is solely determined by sensing or predicting the evolution of critical waveforms in the power circuit.

In one embodiment of the present invention, a voltage sensor may be placed across transformer T or at node 3 (FIG. 1); the drive signal can be terminated when this voltage is sensed to be decreasing rapidly, indicating the onset of the transformer reset, at time t₃.

In another embodiment, the duration of the Qₐᵤₓ drive signal may be calculated or otherwise estimated using known information including the output and input voltage amplitude, the switching frequency, the value of the resonant components Cr and Lr, the value of the main inductor (for instance L_{boost}) and the amplitude of the current it conducts.

For Qₘₐᵢₙ the drive pulse begins at a time when the resonant transition of the collector voltage of Qₘₐᵢₙ has reached its minimum value (t₂ in FIG. 1). Again, in some embodiments this time can be assessed by sensing the instantaneous amplitude of the voltage on the resonant capacitor Cr or its rate of change. Alternatively, it can be calculated or otherwise estimated using known information including the output and input voltage amplitude, the switching frequency, the value of the resonant components Cr and Lr, the value of the main inductor (for instance L_{boost}) and the amplitude of the current it conducts.

The drive pulse for Qₘₐᵢₙ is terminated as determined by the controller, which may utilize pulse width modulation (PWM) or frequency modulation (FM) or a combination of the two. To this point, both FM and PWM are effective control methods when the converter operates in discontinuous conduction mode (DCM), whereas only PWM is properly practical in continuous conduction (CCM). Therefore, PWM is the nominal control method, but FM may also be added in order to simplify the control, especially at light loads, when the converter naturally enters DCM operation. The PWM signal may be generated by means of any of the well-known conventional techniques, including average mode current control, peak mode current control, voltage mode control with or without feedforward, charge mode control and more. Similarly, the FM signal may be generated by a conventional voltage-controlled oscillator or frequency generator.

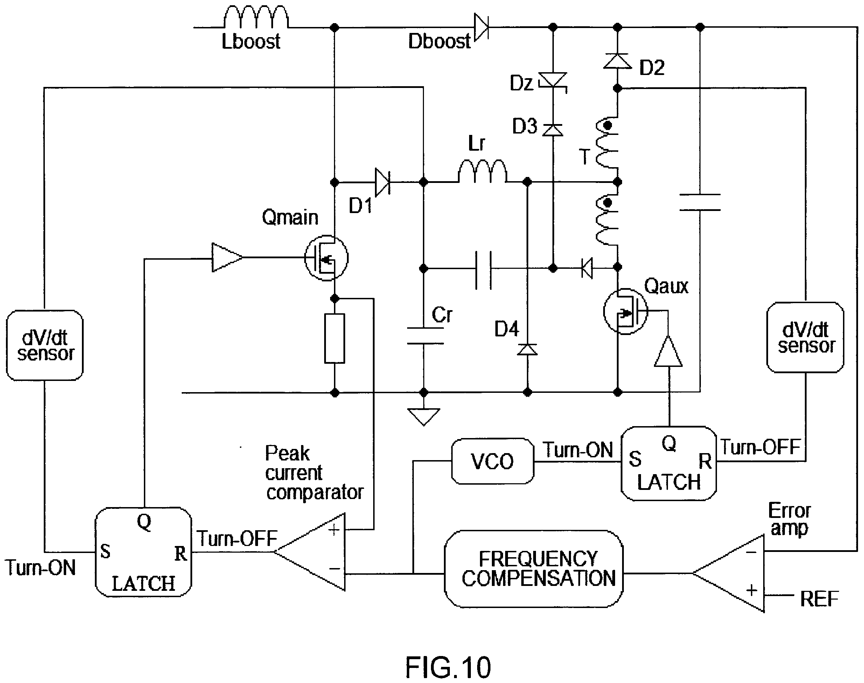

Fig. 10 illustrates comprehensively the control for the soft-switching cell. The output voltage is sensed and compared to a reference, generating a frequency-compensated error signal. The error signal is then fed to both a peak-current mode controller and a frequency generator in a way that an increasing error signal produces a decreasing peak current reference as well as a decreasing frequency. This means that in high load conditions, the frequency of operation will also be higher. Operating at high frequency with higher load conditions allows the designer to select a boost inductor that partly saturates with increasing DC bias without suffering increasing ripple current. Such inductor benefits from considerable reduction in energy loss, size and cost. Operating at low frequency with lower loads also affords a substantial benefit that relates to an intrinsic feature of the soft-switching cell: the fact that Qₐᵤₓ is always driven on and off at the start of every cycle. This operation entails that a minimum amount of energy is always transferred to the output, even when Qₘₐᵢₙ is continuously in the off-state. Consequently, further controlled reduction of the output power can only be achieved by decreasing the frequency of operation.

We note separately that in the circuits, where the rate of change of rectifier current is controlled by a snubber inductor connected in series with the boost switch and the rectifier, due to the placement of the inductor, the voltage stress of the main switch is higher. This increased voltage stress can be minimized by a proper selection of the snubber-inductance value and the switching frequency. Both the boost and the auxiliary switches in these circuits, as well as the boost rectifier, operate under ZVS conditions.

To eliminate switching losses in the PWM converter, a zero-current, zero-voltage-switched (ZC-ZVS) cell which includes a snubber inductor, a clamp diode, a clamp capacitor, a main switch, and an auxiliary switch. The ZC-ZVS cell reduces reverse-recovery-related losses of the boost rectifier and also provides lossless switching for the main and auxiliary switches. The reverse-recovery-related losses in the boost topology are reduced by the snubber inductor, which is connected in series with the main switch (boost switch) and the boost rectifier, and which controls the rate of current change (di/dt) in the boost rectifier during its turn-off. Moreover, the main switch operates with zero-current and zero-voltage switching, and the auxiliary switch operates with zero-voltage switching. The proper operation requires overlapping gate drives of the main and the auxiliary switches, where the main switch becomes conducting or non-conducting prior to the auxiliary switch becoming conducting or non-conducting.

When the main switch of the boost converter with the proposed ZC-ZVS cell becomes conducting, the snubber inductor controls the rate of change of the current in the boost rectifier to reduce reverse-recovery-related losses of the boost rectifier. In addition, since the snubber inductor prevents the main-switch current from increasing immediately, the main switch becomes conducting with zero-current switching. Further, during the conducting period of the main switch, the snubber inductor and the output capacitance of the auxiliary switch form a resonant circuit, so that the voltage across the auxiliary switch falls to zero by a resonant oscillation. As a result, the auxiliary switch becomes conducting when the voltage across it is zero.

During the period when both the main and the auxiliary switch are conducting, the snubber inductor and the clamp capacitor form yet another resonant circuit through the closed switches. Due to this resonance, the current through the main switch is reduced to zero prior to the main switch becoming non-conducting, while the voltage across the main switch is clamped to zero by the conducting clamp diode and the auxiliary switch. Thus, the main switch turns off with zero-current-zero-voltage switching.

Since the main and the auxiliary switches have their source terminals connected to the circuit ground, a non-isolated (direct) gate drive can be used. In addition, because the proper operation of the circuit requires that the conduction periods of the main and the auxiliary switches overlap, a circuit of the present invention is not susceptible to failures due to accidental transient overlapping of the main and auxiliary switch gate drives. Further, the voltage and current stresses of the components in an active-snubber boost converter are similar to those in conventional "hard-switched" converters.

Having described various embodiments and implementations of the present invention, it should be apparent to those skilled in the relevant art that the foregoing is illustrative only and not limiting, having been presented by way of example only. The functions of any one element may be carried out in various ways in alternative embodiments. It is possible to modify further the converters described in US Patents 6,005,782 or 6,051,961. It is also possible to modify further the resonant type converters (described in US Pat. 4,024,453; US Pat. 4,720,667; or US Pat.6,496,388), or Phase-Shift-Full-Bridge type converters (described in US Pat.4,855,888; or US Pat.4,860,189) in order to reduce or eliminate a variety drawbacks that include input/output range limitations, isolation requirements, and complex control.

Furthermore, the functions of several elements may, in alternative embodiments, be carried out by fewer, or a single, element. All the above-cited patents are incorporated by reference as if fully provided herein.

## Claims

1. A power converter designed for operation at high frequencies including a soft-switching cell comprising a split inductor, a resonant inductor, a resonant capacitor, two diodes and a controlled semiconductor.

2. A power converter designed for operation at high frequencies including a soft-switching cell comprising a transformer having isolated windings, a resonant inductor, a resonant capacitor, two diodes and a controlled semiconductor.

3. The power converter of claim 1 or 2, wherein the resonant inductor and the resonant capacitor form a resonant tank connected to an active circuit that is actuated just prior to the turn-on transition of the main switching device in order to event triggers a half-wavelength resonant voltage transition on the resonant capacitor that causes its voltage to transition from a non-zero value to virtually zero.

4. The power converter of claim 1, wherein said two diodes include a first clamp diode is connected from ground to one terminal of the split inductor, and a second clamp diode is connected from another terminal of the split inductor to a known DC voltage bus;
and/or preferably
said second clamp diode that is connected from a terminal of the split inductor to a known DC voltage bus includes a zener diode in order to facilitate the demagnetization of said split inductor.

5. The power converter of claim 2, wherein said two diodes include a first clamp diode is connected from ground to one terminal of said transformer and a second clamp diode is connected from another terminal of said transformer to a known DC voltage bus;
and/or preferably
said second clamp diode that is connected from a terminal of said transformer to a known DC voltage bus is replaced by a zener diode in order to facilitate the demagnetization of said transformer.

6. The power converter of claim 1 or 2 , including a lossless capacitive snubber connecting the controlled semiconductor to the resonant capacitor.

7. The power converter of claim 6, wherein said lossless snubber includes a diode and a capacitor.

8. A method for controlling operation of a power converter designed for operation at high frequencies includes:
providing a soft-switching cell of claim 1, and
producing a first drive signal for the an Qₐᵤₓ controlled semiconductor and a second drive signal for the an Qₘₐᵢₙ controlled semiconductor.

9. A method for controlling operation of a power converter designed for operation at high frequencies includes:
providing a soft-switching cell of claim 2, and
producing a first drive signal for the an Qₐᵤₓ controlled semiconductor and a second drive signal for the an Qₘₐᵢₙ controlled semiconductor.

10. The method of claim 8 or 9 including terminating said first drive signal upon sensing a voltage transition at any of the windings of the transformer.

11. The method of claim 8 or 9 including terminating said first drive signal after a time that is calculated or estimated using known circuit values and parameters.

12. The method of claim 8 or 9 including initiating said second drive signal upon sensing a transition on the voltage of the resonant capacitor;
and/or preferably
initiating said second drive signal upon comparison of the voltage of the resonant capacitor to a set minimum threshold;
and/or preferably
initiating said second drive signal upon detection of a decrease of the rate of change of the voltage of the resonant capacitor.

13. The method of claim 12 including terminating said second drive signal by a PWM controller;
and/or preferably
terminating said second drive signal by a peak-current mode controller.

14. The method of claim 8 or 9 including modulating the operational frequency in response to the feedback control loop error signal.
